# EUROPEAN PATENT APPLICATION

(11) **EP 4 624 677 A1**
(43) Date of publication of application: **01.10.2025**
(21) Application number: 24222783.3
(22) Date of filing: 23.12.2024
(51) Int. Cl.: E02F 9/08, B60R 11/02

(54) **WORKING VEHICLE**

(30) Priority: 29.03.2024 JP 2024057110
(71) Applicant: Takeuchi MFG. Co., Ltd., Hanishina-gun, Nagano 389-0605 (JP)
(72) Inventor: Shioiri, Yuichi, Nagano 389-0605 (JP); Tanaka, Kenichi, Nagano 389-0605 (JP); Kanazawa, Tsuyoshi, Kanagawa 252-5293 (JP)
(74) Representative: Liesegang, Eva

(57) **Abstract**

Provided is a working vehicle that an angle in a vertical direction of a display screen portion of a display device can be adjusted to an angle that allows an operator to easily watch the display screen portion. A working vehicle includes: a display device; a lateral pipe portion that allows a wire harness connected to the display device to pass through the lateral pipe portion, and is disposed in front of an operator seat, a fixing portion that includes a clamp mechanism portion that fixes the display device to the lateral pipe portion, and a waterproof grommet that engages with a wire harness inserting opening portion of the lateral pipe portion by fitting engagement. The display device can be rotated as using the lateral pipe portion as a rotary shaft by loosening fastening of the lateral pipe portion by the clamp mechanism portion. The display device can be fixed at a desired angle θ by the clamp mechanism portion.

## Description

### [Technical Field]

The present invention relates to a working vehicle.

### [Background Art]

As a working vehicle, for example, a crawler-type skid-steer loader, a hydraulic excavator and the like that are used for digging a ground or for moving dug soil and sand have been popularly known. Such a working vehicle includes a display device that displays a battery residual amount, an alarm informing the occurrence of abnormality in an oil pressure, an oil temperature and the like, and a working mode such as a traveling speed and the like. It is preferred that such a display device is disposed at a position where a driver can easily watch the display device during an operation.

There has been known a working vehicle that includes an operation box that is disposed in front of an operator seat and at a height position that an operator can easily operate. The operation box includes an operation equipment for operating the working vehicle. In the operation box, the display device that includes various display instrument and mode operation switches is housed. This display device is disposed at the position on the direction of the line of sight of the operator who watches working in a field in front of the working vehicle (for example, see the patent document JP-A-2001-55759).

Further, with respect to a working vehicle, there has been disclosed a display device that is supported by a flexible arm erected on a device body
portion in which a controller is incorporated (for example, see the patent document JP-A-2010-105568). The display device is rotatably joined to an upper end portion of the arm by a ball joint. The arm is constituted of a flexible tube that is formed by spirally forming a strip-shaped metal plate, and a wire harness is inserted into the arm. The display device is supported by the ball joint and the flexible tube and hence, an angle and a position of a display screen portion of the display device can be flexibly adjusted.

Further, with respect to a working vehicle, there has been disclosed an example where a support portion of a display device is constituted of a receiving portion that is mounted on a back surface of a display screen portion, a pillar portion inserted into the receiving portion, and a locking portion that connects the receiving portion and the pillar portion to each other (for example, see the patent document JP-A-2021-30804). The display device is configured such that a display screen portion is switchable between a longitudinal posture and a lateral posture by loosening the locking portion.

### [Citation List]

### [Patent document]

[Patent document 1] JP-A-2001-55759
[Patent document 2] JP-A-2010-105568
[Patent document 3] JP-A-2021-30804

### [Summary of Invention]

### [Technical Problem]

The display device described in the patent document JP-A-2001-55759 is housed in the same box body together with an operation box portion and forms a portion of the operation manipulation device. The operation manipulation device is mounted on a vehicle body by an operation box bracket via an arm. The arm is rotatably fixed by an arm support shaft that extends in a longitudinal direction of the working vehicle. With such a configuration, the operation manipulation device (display device) can be rotated using the arm support shaft as a rotary shaft. However, the display device has a drawback that a display screen portion of the display device cannot be adjusted to an angle in the longitudinal direction at which an operator can easily watch a display screen portion of the display device. Further, a wire harness is disposed in a naked state between the arm and the operation box bracket and hence, there is a concern that the operator is caught by the wire harness. Further, although the wire harness is made to pass through the operation box bracket, in a working vehicle having a canopy specification, rainwater intrudes from an insertion port of the wire harness.

The display device described in the patent document JP-A-2010-105568 is configured such that the display screen portion of the display device is easily adjusted at a desired angle and at a desired position. However, neither the ball joint nor the flexible tube has a fixing portion for fixing a state where the angle and the position are adjusted. Accordingly, there is a concern that the angle and the position are displaced due to vibrations or an impact during traveling or during working. Further, there also exists a drawback that, at the time of adjusting the angle and the position, the flexible tube that is formed by a strip-shaped metal plate into a spiral shape rubs the display device and hence, coating or the like is peeled off. Further, the arm is formed of the flexible tube that is formed by forming the strip-shaped metal plate into a spiral shape and hence, in a working vehicle of a canopy specification, due to the adjustment of an angle or the like, rainwater intrudes from the spiral portion when the flexible tube is bent.

The display device described in the patent document JP-A-2021-30804 is configured such that the display screen portion is switchable between a longitudinal posture and a lateral posture. However, the display device cannot arbitrarily change an angle of the display screen portion in the longitudinal direction in conformity with the direction of the line of sight of the operator. Further, at the time of switching the display screen portion from a longitudinal posture to a lateral posture, there is a concern that the receiving portion and the pillar portion are rubbed with each other and hence, coating is peeled off.

In view of such circumstances, the present invention has been made to solve at least one of such drawbacks, so that an angle in a vertical direction of a display screen portion of a display device can be adjusted to an angle that allows an operator to easily watch the display screen portion. Further, it is also possible to prevent coating on a lateral pipe portion that supports the display device from being peeled off. Further, it is possible to realize a working vehicle capable of preventing the intrusion of rainwater from the lateral pipe portion through which a wire harness passes.

### [Solution to problem]

[1] A working vehicle according to the present invention includes: a display device; a lateral pipe portion; a fixing portion; and a waterproof grommet. The lateral pipe portion allows a wire harness connected to the display device to pass therethrough, and is disposed in front of an operator seat. The fixing portion includes a clamp mechanism portion that fixes the display device to the lateral pipe portion. The waterproof grommet is fit into a wire harness inserting opening portion of the lateral pipe portion. The clamp mechanism portion is configured to be capable of rotating the display device using the lateral pipe portion as a rotary shaft by loosening fastening of the lateral pipe portion, and is configured to be capable of fixing the display device by fastening the lateral pipe portion.
[2] It is preferred that the working vehicle according to the present invention is configured as follows. The clamp mechanism portion includes: a lateral pipe portion through hole through which the lateral pipe portion is allowed to pass; a slit portion that reaches an outer shell from the lateral pipe portion through hole; a bolt that is disposed across the slit portion in a cross-sectional direction; and a handle portion in which a female thread that threadedly engages with the bolt is formed. The handle portion is configured, by rotating the handle portion toward one side, to widen a distance of the slit portion so as to rotate the display device using the lateral pipe portion as a rotary shaft, and the handle portion is configured, by rotating the handle portion to the other side, to narrow the distance so as to fix the display device to the lateral pipe portion.
[3] It is preferred that the working vehicle according to the present invention further includes a rotational angle restricting mechanism that restricts a rotational angle of the display device. It is preferred that the rotational angle restricting mechanism includes: a display bracket that is fixed to the display device; and "a fixing part of an angle restricting shaft" that is fixed to the lateral pipe portion and extends along the display bracket. The display bracket has an elongated hole that is elongated in a rotational direction of the display device. The angle restricting shaft passes through the elongated hole, and the display device is capable of rotating within a range in which the angle restricting shaft is brought into contact with the elongated hole.
[4] It is preferred that the working vehicle according to the present invention is configured such that a sliding assist member is interposed between the lateral pipe portion and a lateral pipe portion through hole formed in the fixing portion.
[5] It is preferred that the working vehicle according to the present invention is configured such that the sliding assist member is a heat-shrinkable tube.
[6] It is preferred that the working vehicle according to the present invention is configured such that the lateral pipe portion constitutes a portion of a handrail disposed in front of the operator seat, and the handrail is fixed to a side surface of a front cover fixing part that fixes a front cover disposed in front of the operator seat.

### [Advantageous effect of the Invention]

The display device is disposed on a front side of the operator seat, and is fixed to the lateral pipe portion that extends in the width direction of the working vehicle by the fixing portion. The lateral pipe portion allows the wire harness connected to the display device to pass therethrough. The fixing portion includes a clamp mechanism portion. By loosening the fastening of the fixing portion, the display device can be rotated using the lateral pipe portion as a rotary shaft. Further, by fastening the fixing portion, the display device can be fixed to the lateral pipe portion at a desired angle. Accordingly, the display device (display screen portion) can be adjusted to an angle at which an operator can easily watch the display device. Further, the display device can be fixed to the lateral pipe portion by the fixing portion and hence, it is possible to prevent a mounting angle of the display device from being displaced due to vibrations or an impact generated during traveling of the working vehicle or during a working performed by the working vehicle.

Further, the most portion of the wire harness is made to pass through the inside of the lateral pipe portion. Accordingly, it is possible to prevent an operator from being caught by the wire harness, and the working vehicle can exhibit a neat appearance.

Further, the waterproof grommet engages with the wire harness inserting opening portion of the lateral pipe portion by fitting engagement. By providing the waterproof grommet, it is possible to prevent the intrusion of rainwater, dirt and the like into the inside of the lateral pipe portion from the wire harness inserting opening portion. Further, it is possible to prevent short-circuiting of the wire harness or the occurrence of a failure in an electric equipment due to the intrusion of rainwater into the inside of the front cover along the wire harness. Still further, the wire harness is made to pass through the waterproof grommet and hence, it is possible to prevent the occurrence of a case where the wire harness is directly brought into contact with the wire harness inserting opening portion of the lateral pipe portion so that coating of the wire harness is damaged by rubbing.

### [Brief Description of Drawings]

Fig. 1 is a perspective view of one example of a working vehicle 1 as viewed from a rear side.
Fig. 2 is a perspective view of a vehicle body 10 as viewed from a side surface direction.
Fig. 3 is a perspective view of the vehicle body 10 as viewed from an oblique front side.
Fig. 4 is a front view of the vehicle body 10 as viewed from a front side illustrating the mounting structure of a display device 23.
Fig. 5 is a side view of a mounting structure of the display device 23 as viewed from a right side of the vehicle body 10.
Figs. 6A and 6B are explanatory views illustrating a posture adjustment method of display device 23.

### [Description of embodiments]

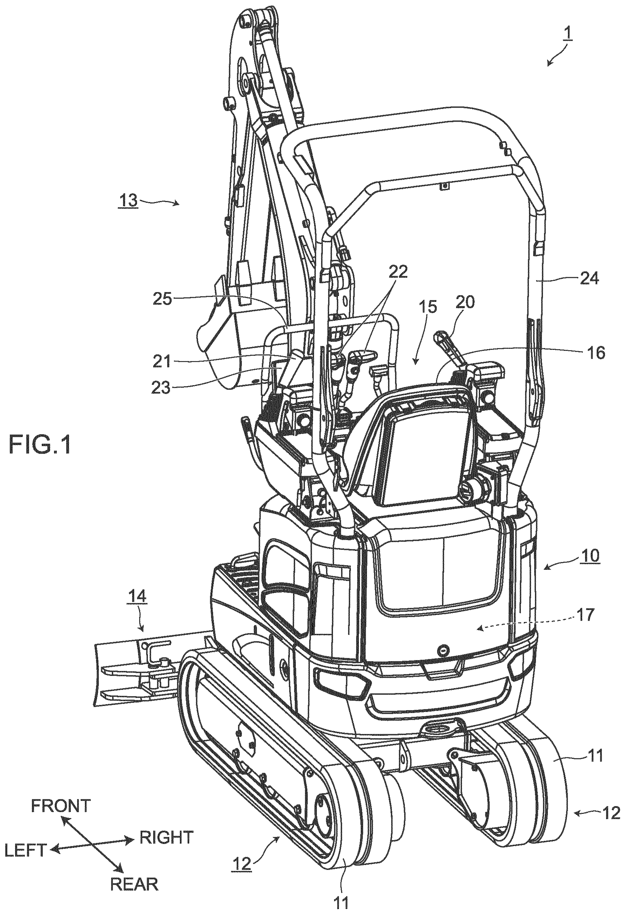

Hereinafter, a working vehicle 1 according to an embodiment of the present invention is described with reference to Fig. 1 to Fig. 6B.

### (Configuration of working vehicle 1)

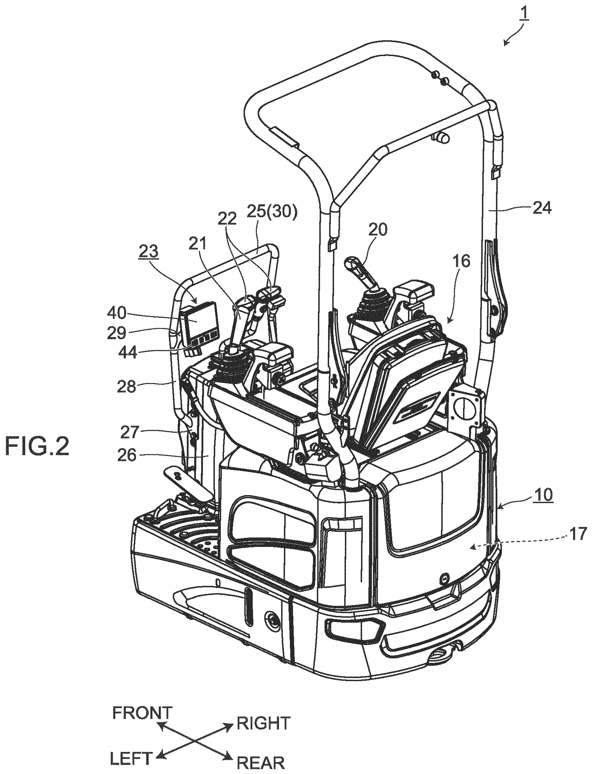

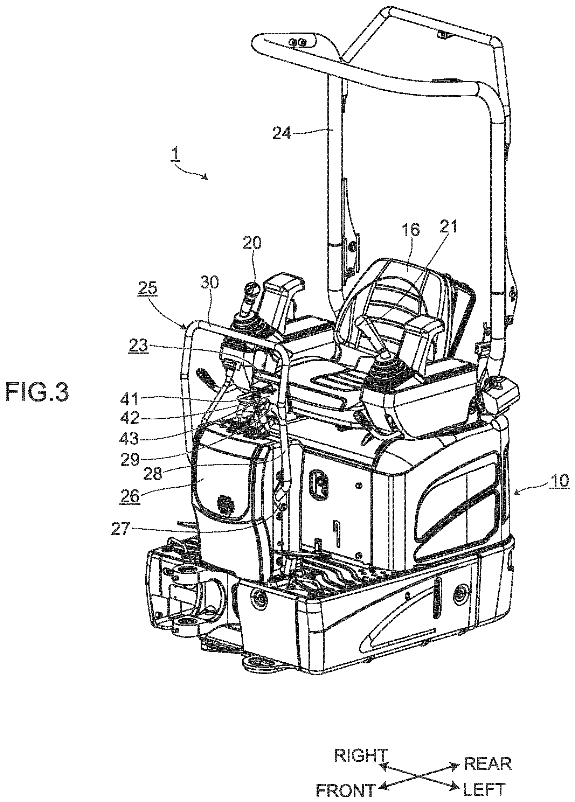

Fig. 1 is a perspective view of one example of a working vehicle 1 as viewed from a rear side. Fig. 2 is a perspective view of a vehicle body 10 that is an upper slew body as viewed from a side surface direction of the vehicle body 10. Fig. 3 is a perspective view of the vehicle body 10 as viewed from an oblique front side. In the respective drawings illustrated hereinafter, the directions of the respective portions with respect to the vehicle body 10 are indicated by arrows. That is, with respect to the respective directions, an advancing direction of the working vehicle 1 is set as "front", a backward direction is set as "rear", a right side facing the advancing direction is set as "right", and a left side facing the advancing direction is set as "left". The working vehicle 1 includes: a traveling device 12 having a pair of crawlers 11 below both ends of the vehicle body 10 in the vehicle width direction (the left and the right direction); a working device 13 that is hydraulically driven, a blade device 14 and the like.

On an upper portion of the vehicle body 10, a cabin 15 in which an operator performs the operations of the traveling device 12, the working device 13 and the blade device 14 and an operator seat 16 on which the operator is seated are disposed. Although not illustrated in the drawing, the vehicle body 10 is configured to include a machine compartment 17 in which a hydraulic pump, a power supply (a battery) that supplies electricity, and a power supply circuit are provided. The cabin 15 has a canopy configuration having no roof or the like. The traveling device 12, the working device 13 and the blade device 14 are described in the same manner as a known working vehicle and hence, the description of these devices is omitted.

The cabin 15 includes a right remote control lever 20, a left remote control lever 21 and a traveling lever 22 for operating the traveling device 12, the working device 13, the blade device 14 and the like, and a display device 23 that displays operation switches and various vehicle information. The cabin 15 has a rear brace 24 that is raised on a rear side of the operator seat 16, and a handrail 25 that is raised on a front side. The display device 23 is mounted on the handrail 25.

The rear brace 24 and the handrail 25 are formed of a pipe. The handrail 25 has a function of mounting the display device 23.

The mounting position of the display device 23 is described with reference to Fig. 2 and Fig. 3. Symbols affixed in Fig. 2 and Fig. 3 are equal to the symbols of the identical parts in Fig. 1 and hence, there may be a case where the description of these parts may be omitted. In the display device 23, a display screen portion 40 is fixed to the handrail 25 directed toward the operator seat 16, that is, the operator seated on the operator seat 16. The handrail 25 is fixed by brackets 27 to both left and right sides of a front cover fixing part (not illustrating in the drawing) that fixes a front cover 26 inside the front cover 26 disposed in front of the vehicle body 10. The bracket 27 on the right side surface is not illustrated in the drawing.

A wire harness 41 (see Fig. 3) is connected to the display device 23. The wire harness 41 is inserted through the handrail 25 and extends towards the inside of the front cover 26. In this embodiment, the wire harness 41 is formed by collecting a plurality of cables by a protective tube. The handrail 25 includes: a pillar portion 28 that is fixed to a left side surface of the front cover 26 by brackets 27; and lateral pipe portions 29 that are bent and extend in the width direction (right side) of the vehicle body 10 from an upper end side of the pillar portion 28. The handrail 25 is constituted of the pillar portions 28 and a front handrail portion 30 that extends between upper portions of the pillar portions 28. The pillar portions 28 and the front handrail portion 30 are connected and fixed to each other by welding or the like. The right side of the front handrail portion 30 is fixed to the front cover 26 by the bracket 27 in the same manner as the left side.

The wire harness 41 passes through the lateral pipe 29 and the pillar portion 28, and passes through the inside of the front cover 26. The lateral pipe 29 is formed by bending the pillar portion 28 and hence, it is possible to easily make the wire harness 41 pass through the lateral pipe portion 29 and the pillar portion 28. The display device 23 includes the display screen portion 40 that displays a traveling situation, a working situation and the like. The display device 23 is connected to various control circuits (not illustrated in the drawing) that are disposed inside the front cover 26 via the wire harness 41.

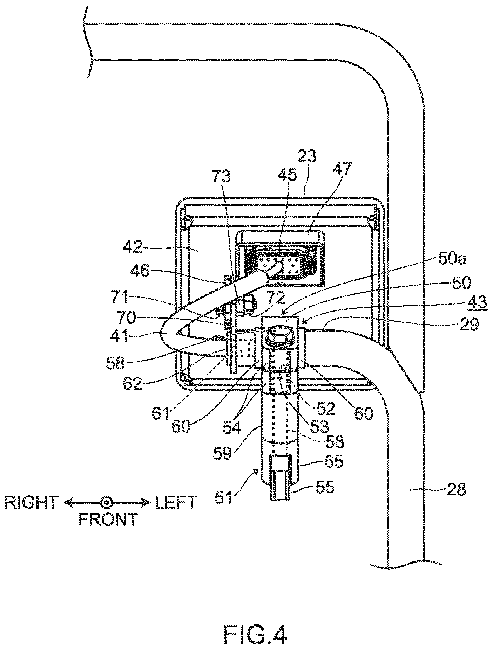

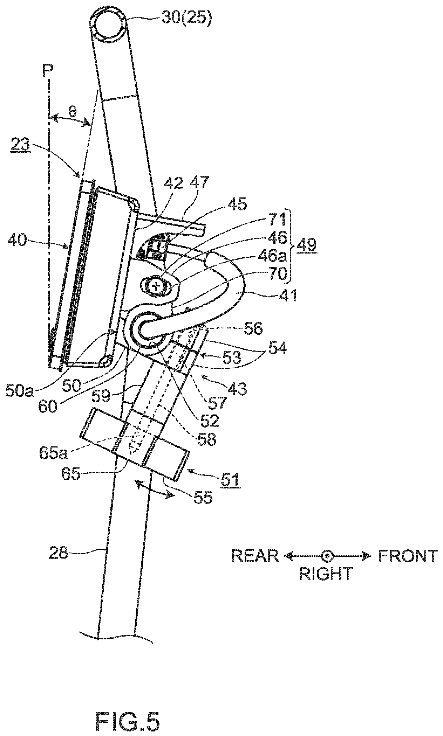

The display device 23 is fixed to a fixing portion 43 by a fixing means such as screws. The display device 23 is mounted on the lateral pipe portion 29 by the fixing portion 43. The mounting structure of the display device 23 is described with reference to Fig. 4 and Fig. 5.

### (Mounting structure of display device 23)

Fig. 4 illustrates the mounting structure of the display device 23, and is a front view of the mounting structure as viewed from a front side of the vehicle body 10. Fig. 5 is a side view of the mounting structure of the display device 23 as viewed from a right side of the vehicle body 10. As illustrated in Fig. 4 and Fig. 5, the display device 23 includes: a connector portion 45 that connects the wire harness 41 to a back surface portion 42; a display bracket 46 that connects the display device 23 and the fixing portion 43 to each other in a rotatable manner within a predetermined range; and an eaves portion 47 that covers the connector portion 45 from above. The eaves portion 47 and the display bracket 46 are integrally joined to the back surface portion 42 by welding. In the display bracket 46, an elongated hole 46a (see Fig. 5) that is elongated in the rotational direction of the display device 23 is formed as a swing restricting means that restricts a swing range of the display device 23.

The fixing portion 43 includes: a body portion 50 for fixing the display device 23; and a handle portion 51 that fastens or loosens the fixing portion 43 with respect to the lateral pipe portion 29. The body portion 50 has: a lateral pipe portion through hole 52 that allows the lateral pipe portion 29 to pass therethrough; and a slit portion 53 that traverses the lateral pipe portion through hole 52 and an outer shell of the body portion 50. The body portion 50 has a fixing surface 50a that opposedly faces the back surface portion 42 of the display device 23, and the display device 23 is fixed by a fixing means such as screws (not illustrated in the drawing) after bringing the back surface portion 42 and the fixing surface 50a into contact with each other.

The slit portion 53 is formed on a side opposite to the lateral pipe portion though hole 52 with respect to the display device 23. By forming the slit portion 53, the fixing portion 43 constitutes a so-called clamp mechanism portion 54. A through hole 56 (see Fig. 5) that traverses the slit portion 53 is formed in the clamp mechanism portion 54. As illustrated in Fig. 5, the handle portion 51 includes: a grip portion 55; a grip portion fixing member 65 that fixes the grip portion 55; and a collar 59. A female thread 65a is formed in the grip portion fixing member 65. The clamp mechanism portion 54 joins the body portion 50 and the handle portion 51 as an integral body by allowing a male thread 57 of a bolt 58 to pass through the through hole 56 and the collar 59 from a side opposite to the handle portion 51 and by making the male thread 57 threadedly engages with the female thread 65a formed in the grip portion fixing member 65.

By loosening the bolt 58 by rotating the handle portion 51 in a counterclockwise direction as viewed from a lower side thus widening a distance of the slit portion 53, the display device 23 can be rotated to a desired angle θ using the lateral pipe portion 29 as a rotary shaft. Then, by fastening the bolt 58 by rotating the handle portion 51 in a clockwise direction as viewed from a lower side thus narrowing a distance of the slit portion 53, the display device 23 can be fixed to the lateral pipe portion 29. The grip portion 55 is protruded by a length larger than an outer diameter of the grip portion fixing member 65 so as to allow a user to easily grasp the grip portion 55 and hence, the grip portion 55 can be easily operated without using a particular tool.

A heat-shrinkable tube 60 that forms a slide assisting member is interposed between the lateral pipe portion through hole 52 of the fixing portion 43 and the lateral pipe portion 29. Further, a waterproof grommet 62 that allows the wire harness 41 to pass therethrough is fitted in a wire harness inserting opening portion 61 (see Fig. 4) of the lateral pipe portion 29. With the provision of the water proof grommet 62, waterproof property and dirt preventing property can be maintained between the wire harness 41 and the lateral pipe portion 29. A fixing part 70 of an angle restricting shaft 71 is fixed to a distal end portion of the lateral pipe portion 29. The fixing part 70 of the angle restricting shaft 71 is a plate member that extends to the position where the fixing part 70 overlaps with the display bracket 46.

The display bracket 46 and the fixing part 70 of the angle restricting shaft 71 are connected to each other by way of the angle restricting shaft 71. For example, the angle restricting shaft 71 is a bolt, and a shaft portion of the angle restricting shaft 71 passes through the elongated hole 46a of the display bracket 46 and a through hole (not illustrating the drawing) formed in the fixing part 70 of the angle restricting shaft 71, and a protruding screw portion threadedly engages with a nut 73 (see Fig. 4) welded to the fixing part 70 of the angle restricting shaft 71. The fixing part 70 of the angle restricting shaft 71 is fixed to the lateral pipe portion 29. A double nut structure may be adopted by providing a nut 72 in addition to the nut 73. The display bracket 46 is fixed to the display device 23. Accordingly, when the display device 23 is rotated in a clockwise direction, an end portion of the elongated hole 46a on a left side in the drawing is brought into contact with the angle restricting shaft 71 so that the display device 23 is stopped. Then, when the display device 23 is rotated in the counterclockwise direction, an end portion of the elongated hole 46a on a right side in the drawing is brought into contact with the angle restricting shaft 71 and hence, the display device 23 is stopped. That is, the display device 23 is configured to be rotatable within a range that the elongated hole 46a is formed. In the display device 23 illustrated in Fig. 5, the display screen portion 40 is inclined upward by an angle θ with respect to a vertical plane P. In this embodiment, the angle θ is set to 10 degrees. That is, the display bracket 46, the fixing part 70 of the angle restricting shaft 71, and the angle restricting shaft 71 constitute a rotational angle restricting mechanism 49 of the display device 23.

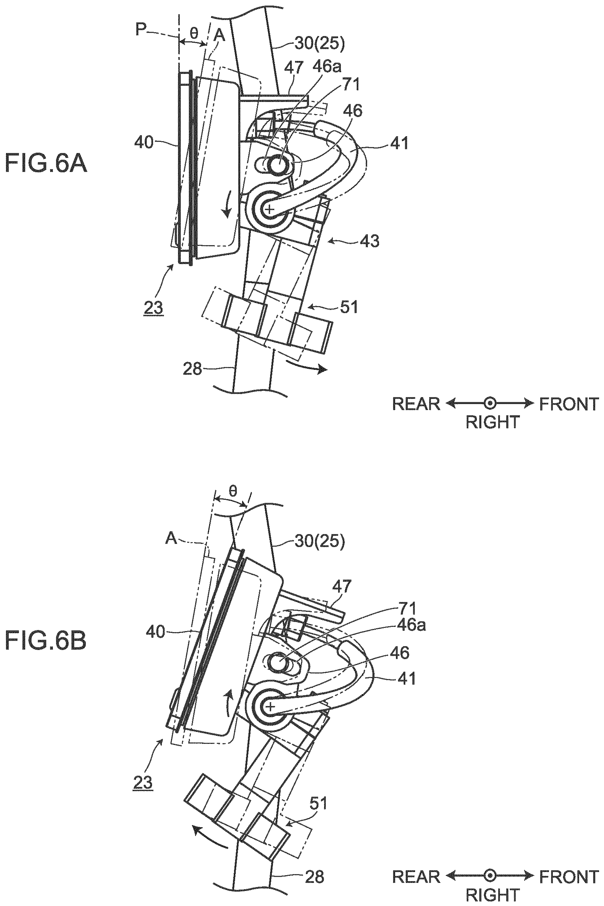

Figs. 6A and 6B are explanatory views describing a posture adjusting method of the display device 23. The posture of the display device 23 can be adjusted to an arbitrary posture within a range that the display device 23 is swingable within a range that the elongated hole 46a formed in the display bracket 46 is brought into contact with the angle restricting shaft 71. Such a configuration is described with reference to Figs. 6A and 6B. When the posture of the display device 23 illustrated in Fig. 5 is referred as a basic posture (posture A), Fig. 6A illustrates a state where the display device 23 is rotated from the basic posture (posture A) by an angle θ in the counterclockwise direction (in the arrow direction). In Fig. 6A, a portion of the display device 23 illustrated in Fig. 5 is indicated by a dash-double-dot line.

As illustrated in Fig. 6A, an operator loosens the threaded engagement between the grip portion fixing member 65 and the bolt 58 by gripping and operating the grip portion 55 of the handle portion 51 thus rotating the display device 23 in the counterclockwise direction (the arrow direction) as viewed from above a surface of a paper on which Fig. 6A is drawn. The display device 23 can be rotated until a right side end of the elongated hole 46a formed in the display bracket 46 is brought into contact with the angle restricting shaft 71. The operator fixes the display device 23 within a range of the angle θ by operating the handle portion 51 thus fastening the fixing portion 43 within the angle θ at which the operator himself or herself can easily watch the display device 23.

Fig. 6B illustrates a state where the display device 23 is rotated by the angle θ in the clockwise direction (in the arrow direction) as viewed from above a surface of a paper on which Fig. 6B is drawn from the posture (posture A) illustrated in Fig. 6 A. Fig. 6B illustrates the portion of the display device 23 illustrated in Fig. 6A by a dash-double-dot line. The operator loosens the threaded engagement between the grip portion fixing member 65 and the bolt 58 by gripping and operating the grip portion 55 of the handle portion 51, thus rotating the display device 23 in the clockwise direction (the arrow direction) as viewed from above the surface of the paper on which Fig. 6B is drawn. The display device 23 can be rotated until a left side end of the elongated hole 46a formed in the display bracket 46 is brought into contact with the angle restricting shaft 71. At this point of time, the display screen portion 40 takes a posture where the display screen portion 40 is inclined by the angle θ in the clockwise direction from the posture A. The operator fixes the display devices 23 by operating the handle portion 51 thus fastening the fixing portion 43 within an angle θ at which the operator can easily watch the display device 23 by himself or herself within the range of the angle θ.

In this embodiment, the angle θ is set to 10 degrees and hence, the display screen portion 40 can be adjusted to an arbitrary angle θ within a range of ± 10 degrees with respect to the posture A illustrated in Fig. 6A. However, the angle θ can be set as desired within a range that the elongated hole 46a can be formed. Further, the means for restricting the rotational angle adjusting range of the display device 23 is not limited to the elongated hole 46a. For example, contact members may be provided in place of the elongated hole 46a. By adopting such a configuration, the wire harness 41 is formed such that a length of a portion of the wire harness 41 that is exposed to the outside between the display device 23 and the lateral pipe portion 29 can be shortened to a necessary minimum length.

The display device 23 can be fixed to the lateral pipe portion 29 that is disposed on a front side of the operator seat 16 and extends in the width direction (the lateral direction) of the working vehicle 1 by the fixing portion 43. The lateral pipe portion 29 allows the wire harness 41 that is connected to the display device 23 to pass therethrough. The fixing portion 43 includes the clamp mechanism portion 54. By loosening the fastening of the fixing portion 43 by operating the handle portion 51, the display device 23 can be rotated using the lateral pipe portion 29 as a rotary shaft. Further, the display device 23 can be fixed at a desired angle θ by operating the handle portion 51 thus fastening the fixing portion 43.

The display device 23 is configured to adjust the angle θ by the lateral pipe portion 29 and the clamp mechanism portion 54. In addition to such a configuration, the wire harness 41 is made to pass through the lateral pipe portion 29. Accordingly, it is possible to prevent the operator from being caught by the wire harness 41 and hence, the display device 23 can have the neat appearance. The display device 23 can be fixed to the lateral pipe portion 29 by the fixing portion 43 and hence, it is possible to prevent the angle θ of the display device 23 from being displaced by vibrations or an impact during traveling of the working vehicle 1 or during the working using the working vehicle 1.

Further, the waterproof grommet 62 engages with the wire harness inserting opening portion 61 of the lateral pipe portion 29 by fitting engagement. By providing the waterproof grommet 62, it is possible to prevent the intrusion of rainwater, dirt and the like into the inside of the lateral pipe portion 29 from the wire harness inserting opening portion 61. As a result, it is possible to prevent the intrusion of rainwater, dirt and the like into the inside of the front cover 26 from the wire harness inserting opening portion 61. Further, it is possible to prevent the occurrence of defects such as short-circuiting of the wire harness 41, or a defect of an electric component or the like caused by the intrusion of rainwater into the inside of the front cover 26 along the wire harness 41 and the like. Further, the wire harness 41 is made to pass through the waterproof grommet 62 and hence, it is possible to prevent the occurrence of a drawback that a coating on the wire harness 41 is damaged by rubbing due to a direct contact of the wire harness 41 to the wire harness inserting opening portion 61 of the lateral pipe portion 29.

The clamp mechanism portion 54 includes: the lateral pipe portion through hole 52 that is formed in the body portion 50; the slit portion 53 that reaches the outer shell of the body portion 50 from the lateral pipe portion through hole 52; a bolt 58 that is disposed so as to sandwich the slit portion 53 in a cross-sectional direction; and the handle portion 51 in which the female thread 65a that threadedly engages with the bolt 58. The clamp mechanism portion 54 is configured such that, by rotating the handle portion 51 toward one side thus widening the distance of the slit portion 53, the display device 23 can be rotated using the lateral pipe portion 29 as a rotary shaft. Further, by rotating the handle portion 51 toward the other side, the distance of the slit portion 53 is narrowed thus fixing the display device 23 to the lateral pipe portion 29.

Further, the display device 23 and the fixing portion 43 have the rotational angle restricting mechanism 49 that restricts the angle θ within which the display device 23 can be rotated. The display device 23 includes the elongated hole 46a formed in the display bracket 46. The fixing portion 43 includes the fixing part 70 of the angle restricting shaft 71 that is fixed to the lateral pipe portion 29. The angle restricting shaft 71 passes through the elongated hole 46a, and threadedly engages with the nut 73 in a state the angle restricting shaft 71 and the nut 73 sandwich the display bracket 46 and the fixing part 70 of the angle restricting shaft 71. With such a configuration, the display bracket 46, that is, the display device 23 can be rotated within the range where the elongated hole 46a is formed.

The display device 23 can restrict the angle θ at which the display device 23 is rotated within a fixed range by the rotational angle restricting mechanism 49, and the handle portion 51 is disposed at a position where the handle portion 51 can be easily operated and hence, the rotational angle adjustment can be easily performed. Further, it is possible to prevent the occurrence of a case where the display device 23 is excessively rotated and hence, the wire harness 41 is stretched or entangled whereby the wire harness 41 is damaged.

Further, the heat-shrinkable tube 60 that functions as a sliding assist member is interposed between the lateral pipe portion 29 and the lateral pipe portion through hole 52 formed in the fixing portion 43. With the provision of the heat-shrinkable tube 60, in the angle adjustment of the display device 23, there is no possibility that the fixing portion 43 is directly brought into contact with the lateral pipe portion 29 and hence, the pealing of coating can be prevented. The sliding assist member is not limited to the heat-shrinkable tube 60, and a tape or the like may be wrapped around the lateral pipe portion 29. However, the heat-shrinkable tube 60 has an advantageous effect that the heat-shrinkable tube 60 can be easily mounted on the lateral pipe portion 29, and exhibits the excellent durability.

The display device 23 is fixed to the lateral pipe portion 29 that forms a portion of the handrail 25. The handrail 25 is fixed to both left and right sides of a front cover fixing part (not illustrated in the drawing) that fixes the front cover 26 by brackets 27. The front cover 26 is disposed on a front side of the vehicle body 10, and the front cover fixing part is disposed inside the front cover 26. With such a configuration, in a small-sized working vehicle 1 having the small cabin 15, it is possible to effectively make use of the space. Further, the wire harness 41 that is connected to the display device 23 allows the arrangement of the display device 23 and the front cover 26 with the shortest route.

The working vehicle 1 that has been described heretofore can adjust the angle θ in the vertical direction of the display screen portion 40 of the display device 23 to an angle θ that allows the operator to easily view the display screen portion 40. Further, it is possible to prevent peeling-off of coating on the lateral pipe portion 29 that supports the display device Still further, it is possible to prevent the intrusion of rainwater into the inside of the lateral pipe portion 29 through which the wire harness 41 passes.
1: working vehicle
16: operator seat
23: display device
25: handrail
26: front cover
27: bracket
28: pillar portion
29: lateral pipe portion
30: front handrail portion
40: display screen portion
41: wire harness
42: back surface portion
43: fixing portion
46: display bracket
46a: elongated hole
49: rotational angle restricting mechanism
50: body portion (of fixing jig)
51: handle portion
52: lateral pipe portion through hole
53: slit portion
54: clamp mechanism portion
56: through hole
57: male thread
58: bolt
60: heat-shrinkable tube (sliding assist member)
61: wire harness inserting opening portion
62: waterproof grommet
65a: female thread
70: fixing part (of angle restricting shaft 71)
71: angle restricting shaft
72, 73: nut
θ: angle
P: vertical surface

## Claims

1. A working vehicle comprising:
a display device;
a lateral pipe portion;
a fixing portion; and
a waterproof grommet, wherein
the lateral pipe portion allows a wire harness connected to the display device to pass therethrough, and is disposed in front of an operator seat,
the fixing portion includes a clamp mechanism portion that fixes the display device to the lateral pipe portion,
the waterproof grommet is fit into a wire harness inserting opening portion of the lateral pipe portion, and
the clamp mechanism portion is configured to be capable of rotating the display device using the lateral pipe portion as a rotary shaft by loosening fastening of the lateral pipe portion, and is configured to be capable of fixing the display device by fastening the lateral pipe portion.

2. The working vehicle according to claim 1, wherein
the clamp mechanism portion includes:
a lateral pipe portion through hole through which the lateral pipe portion is allowed to pass;
a slit portion that reaches an outer shell from the lateral pipe portion through hole;
a bolt that is disposed across the slit portion in a cross-sectional direction; and
a handle portion in which a female thread that threadedly engages with the bolt is formed,
the clamp mechanism portion is configured, by rotating the handle portion toward one side, to widen a distance of the slit portion so as to rotate the display device using the lateral pipe portion as a rotary shaft, and
the clamp mechanism portion is configured, by rotating the handle portion to the other side, to narrow the distance so as to fix the display device to the lateral pipe portion.

3. The working vehicle according to claim 1 or 2, further comprising a rotational angle restricting mechanism that restricts a rotational angle of the display device, wherein
the rotational angle restricting mechanism includes:
a display bracket that is fixed to the display device; and
"a fixing part of an angle restricting shaft" that is fixed to the lateral pipe portion and extends along the display bracket,
the display bracket has an elongated hole that is elongated in a rotational direction of the display device, and
the angle restricting shaft passes through the elongated hole, and the display device is capable of rotating within a range in which the angle restricting shaft is brought into contact with the elongated hole.

4. The working vehicle according to one of the preceding claims, wherein
a sliding assist member is interposed between the lateral pipe portion and a lateral pipe portion through hole formed in the fixing portion.

5. The working vehicle according to claim 4, wherein
the sliding assist member is a heat-shrinkable tube.

6. The working vehicle according to one of the preceding claims, wherein
the lateral pipe portion constitutes a portion of a handrail disposed in front of the operator seat, and
the handrail is fixed to a side surface of a front cover fixing part that fixes a front cover disposed in front of the operator seat.
